# FASCICULE DE BREVET EUROPEEN

(11) **EP 0 680 850 B1**
(45) Date de publication et mention de la délivrance du brevet: **19.11.1997**
(21) Numéro de dépôt: 95401021.1
(22) Date de dépôt: 03.05.1995
(51) Int. Cl.: B60R 16/02

(54) **Contacteur électrique tournant comprenant des moyens de réglage point milieu perfectionnés**
Drehbares elektrisches Verbindungselement mit verbesserter Zentrierung
Rotary contactor with improved center point control

(30) Priorité: 04.05.1994 FR 9405454; 03.10.1994 FR 9411780
(43) Date de publication de la demande: 08.11.1995
(73) Titulaire: MAGNETI MARELLI FRANCE, 92000 Nanterre (FR)
(72) Inventeur: Hallet, Michel, F-14320 Clinchamps sur Orne (FR)
(74) Mandataire: Texier, Christian

(56) Documents cités:
- WO-A-91/17592
- US-A- 4 867 688
- US-A- 4 979 460

## Description

La présente invention concerne le domaine des contacteurs électriques tournants.

Plus précisément, la présente invention concerne les contacteurs du type comprenant:
- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci.

La présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

On a décrit en particulier dans le document FR-A-2667457 un dispositif de transmission de signaux du type précité comprenant deux cages respectivement externe et interne susceptibles de rotation relative et des moyens souples conducteurs de signal placés entre les deux cages, dans lequel le dispositif comprend un système d'indexage formé, d'une part d'un guide en spirale ménagé sur une première pièce, et d'autre part d'un doigt d'indexage engagé sur le guide en spirale et placé dans une fenêtre ménagée dans une seconde pièce susceptible de rotation par rapport à la première pièce, de sorte que le doigt d'indexage soit déplacé radialement par rapport à l'axe de rotation des pièces lorsque celles-ci sont entraînées à rotation relative.

Les moyens décrits dans ce document permettent de détecter la position relative médiane ou "point milieu" entre les deux éléments de base du contacteur, lorsqu'un index prévu sur le doigt d'indexage coïncide avec un index placé en regard sur ladite seconde pièce.

La présente invention a maintenant pour but de perfectionner les contacteurs électriques tournant connus.

Un but de la présente invention est en particulier de proposer un nouveau contacteur qui permette d'améliorer la précision de détection de la position relative intermédiaire ou point milieu entre les deux éléments de base du contacteur.

Ce but est atteint selon la présente invention grâce à un contacteur du type connu comprenant deux éléments susceptibles de rotation relative et un conducteur souple placé entre ces deux éléments, un guide spiral lié à l'un de ces deux éléments et concentrique à l'axe de rotation relative des deux éléments, une glissière radiale liée à l'autre de ces deux éléments et un index en prise à la fois avec le guide spiral et ladite glissière de sorte que l'index soit déplacé radialement par rapport aux deux éléments lorsque ceux-ci sont entraînés en rotation relative, caractérisé par le fait que le contacteur comprend une lumière optiquement transparente limitée radialement à la position occupée par un corps indicateur de l'index en point milieu du contacteur.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une première vue schématique en perspective, à l'état assemblé, d'un contacteur conforme à un premier mode de réalisation de la présente invention,
- la figure 2 représente une vue similaire en perspective éclatée du même contacteur,
- la figure 3 représente une seconde vue en perspective éclatée, opposée à la figure 2, du même contacteur,
- la figure 4 représente une vue schématique en perspective d'un index utilisé dans un contacteur conforme à la présente invention,
- la figure 5 représente une vue schématique en perspective éclatée d'un contacteur conforme à une seconde variante de réalisation de la présente invention, et
- les figures 6 et 7 représentent des vues en perspective d'un index conforme à une variante de réalisation de la présente invention.

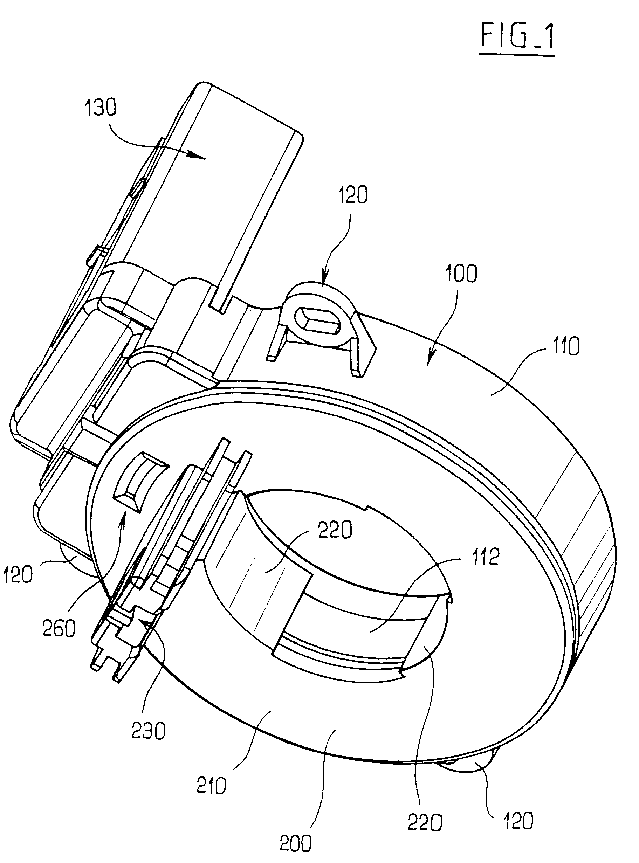

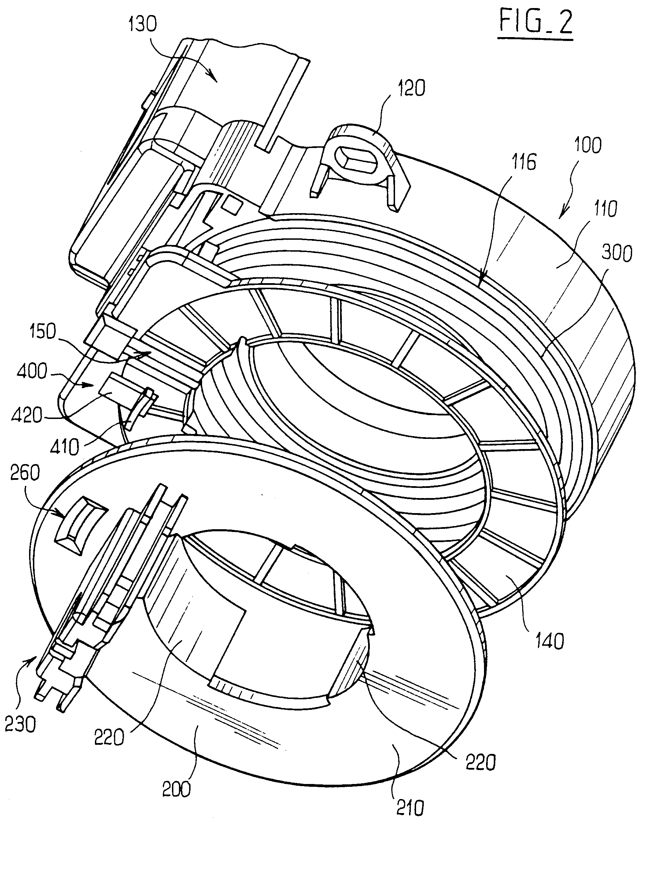

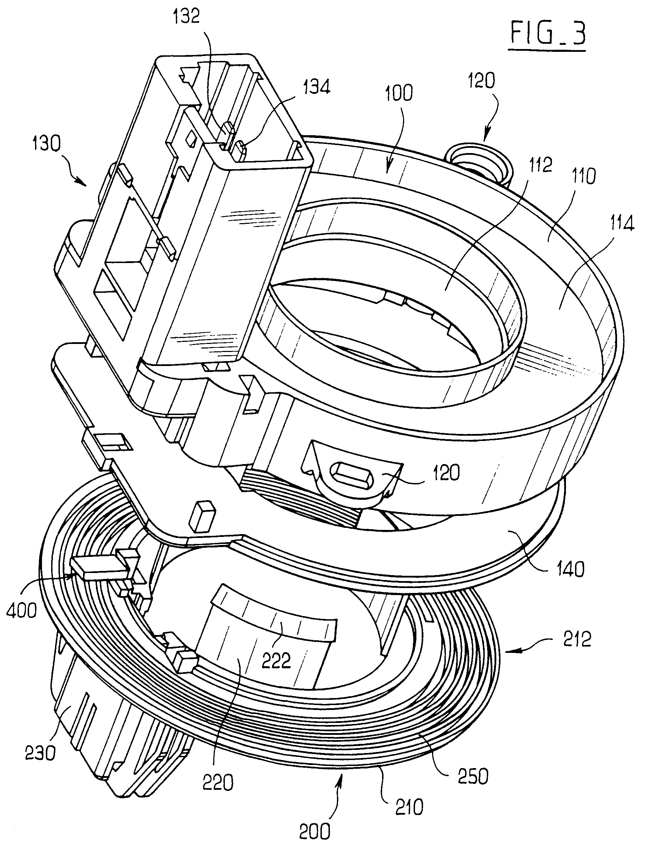

Le contacteur électrique tournant représenté sur les figures 1 à 4 annexées comprend essentiellement un boîtier fixe 100, un couvercle rotatif 200, un conducteur souple 300 et un index 400.

Le boîtier fixe 100 peut faire l'objet de nombreux modes de réalisation.

Il est formé, de préférence, par moulage en matière plastique.

Selon le mode de réalisation particulier et non limitatif représenté sur les figures annexées, le boîtier 100 comprend essentiellement deux parois circulaires concentriques 110, 112 reliées entre elles par une paroi de base 114 en forme de couronne. Les parois 110, 112 et 114 précitées, délimitent ainsi une chambre annulaire 116 apte à contenir le conducteur 300.

La paroi cylindrique externe 110 est pourvue de préférence de points de fixation 120 formés par exemple d'oeillets comme représenté sur les figures annexées.

En outre, la paroi cylindrique extérieure 110 est munie, de préférence sur sa périphérie extérieure, d'un corps de connecteur 130. Ce corps de connecteur 130 comprend des contacts électriques 132, 134 reliés respectivement à des pistes du conducteur souple 300. Le connecteur 130 s'étend avantageusement axialement, c'est-à-dire dans une direction générale parallèle à l'axe des parois 110, 112.

Selon le mode de réalisation préférentiel représenté sur les figures annexées, la cage cylindrique délimitée par les parois 110, 112 et 114 est complétée par une entretoise 140 en forme de couronne. Cette entretoise 140 est liée à rotation avec le boîtier 100. Elle obture partiellement le contour d'ouverture de la chambre annulaire 116 précitée.

L'entretoise 140 sert de plaque intermédiaire entre le boîtier formé par les parois 110, 112, 114 et le couvercle 200. Elle peut assurer par ailleurs diverses fonctions telles que support mécanique, support de contact électrique et/ou protection.

Le couvercle 200 comprend essentiellement une paroi 210 plane en forme de couronne, coaxiale au boîtier 100. La paroi 210 est munie sur sa périphérie interne d'un fût cylindrique 220, ou de différents segments cylindriques équi-répartis autour de son axe, comme représenté sur les figures annexées, engagé dans l'espace interne du boîtier 100. Ainsi le couvercle 210 est monté et guidé à rotation sur le boîtier 100.

Le couvercle 200 est retenu à translation sur le boîtier 100 par tout moyen approprié, par exemple à l'aide de dents 222 en saillie sur l'extrémité du fût 220 ou des segments composants ce fût 220, lesquelles dents 222 viennent en prise avec la paroi cylindrique 112.

De préférence, le couvercle 210 est muni également d'un corps de connecteur 230 au niveau de sa périphérie interne, sur sa face opposée au fût 220. Le corps de connecteur 230 s'étend dans une direction axiale, c'est-à-dire parallèlement à l'axe du couvercle 200 et du boîtier 100.

Le couvercle 200 est ainsi placé sur la face de l'entretoise 140 opposée à la chambre annulaire 116.

Sur sa face 212 adjacente à cette entretoise 140, le couvercle 210 est muni, selon la variante de réalisation représenté sur les figures 1 à 4, d'une rainure spiralée 250, c'est-à-dire une rainure en spirale centrée sur un axe coaxial à l'axe du boîtier 100 et du couvercle 200.

En outre, alors que le couvercle 210 est réalisé de préférence en un matériau opaque sur la quasi-totalité de sa surface, le couvercle 210 est muni d'une lumière 260 optiquement transparente limitée radialement à la position occupée par un corps indicateur 410 de l'index 400, en point milieu du contacteur.

Cette lumière 260 peut être formée d'un évidemment dans le couvercle 210 ou encore d'un hublot en matériau optiquement transparent, par exemple en matière plastique.

Le couvercle 210 ainsi que l'entretoise 140 sont formés avantageusement par moulage en matière thermo-plastique, comme le boîtier 100.

Cette rainure spiralée 250 comprend un nombre de tours égal au nombre de tours de rotation souhaités pour le volant du véhicule, c'est-à-dire le nombre de tours nécessaire entre le boîtier 100 et le couvercle 200.

Les extrémités respectives de la rainure spiralée 250 forment par ailleurs deux butées pour l'index 400, comme on le précisera par la suite.

De son côté le boîtier, plus précisément l'entretoise 140 comprend sur sa face dirigée vers le couvercle 200, une rainure radiale 150 adaptée pour guider à coulissement radial un corps de guidage 420 de l'index 400.

Le conducteur souple 300 peut faire l'objet de nombreux modes de réalisation. Il peut s'agir par exemple d'un faisceau de fils électriquement conducteurs isolés, ou encore de préférence d'un circuit imprimé ou d'un film plastique souple pourvu de plusieurs pistes métallisées parallèles, isolées entre elles.

L'index 400 peut également faire l'objet de nombreux modes de réalisation.

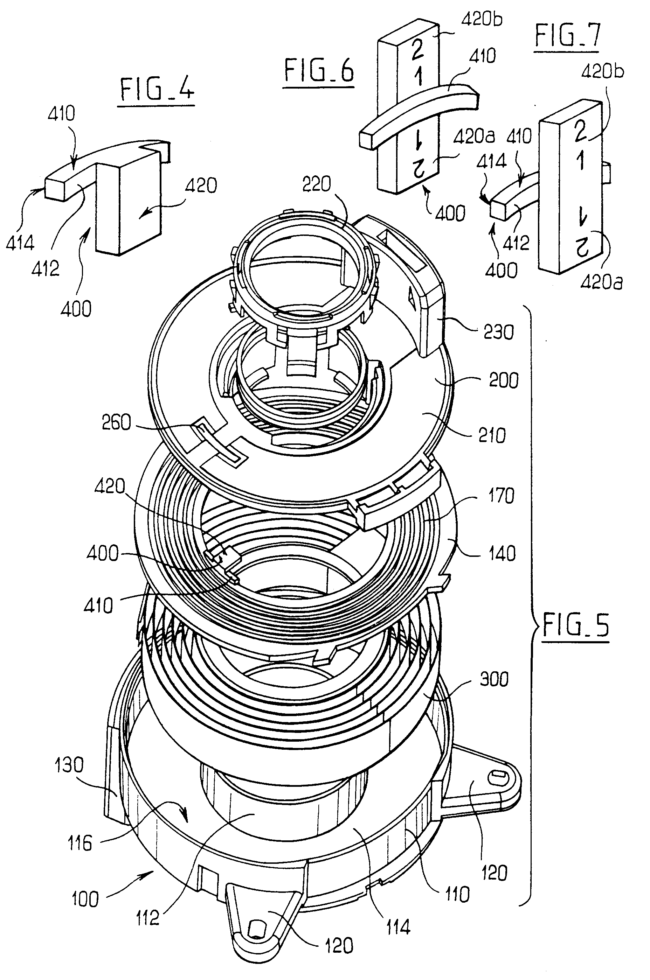

Selon le mode de réalisation préférentiel représenté sur la figure 4, cet index 400 est formé de deux éléments 410, 420 précités, généralement croisés en forme générale de T.

L'élément 410 constitue un corps indicateur. Ce corps indicateur est formé d'un segment cylindrique de courbure compatible avec la rainure spiralée 250, sur la totalité de sa longueur. C'est-à-dire que le corps indicateur 410 est adapté pour coulisser dans la rainure spiralée 250, sur toute la longueur de celle-ci, entre ses deux extrémités.

Par ailleurs, on rappelle que la lumière 260 formée dans le couvercle 200 présente un contour limité radialement à la position occupée par ce corps indicateur 410 en point milieu du contacteur. La lumière 260 présente ainsi, de préférence, une section en forme de secteur de couronne de même contour que la face 412 du corps indicateur 410.

Le corps de guidage 420 est formé quant à lui de préférence d'un barreau rectiligne de section droite rectangulaire adapté pour coulisser radialement dans la rainure 150 de l'entretoise 140.

L'index 400 peut être formé d'une pièce unique, ou encore par assemblage de deux pièces correspondant par exemple respectivement aux éléments 410 et 420.

Selon une autre caractéristique de l'invention, l'index 400 est muni d'un marquage de couleur sur sa face 414 observable à travers la lumière 260. Ce marquage de couleur est d'aspect contrasté par rapport au reste de l'index 400.

Les extrémités du conducteur souple 300 sont reliées respectivement aux contacts électriques placés dans le corps de connecteur 130 et aux contacts électriques placés dans le corps de connecteur 230.

Le fonctionnement du contacteur conforme à la présente invention est essentiellement le suivant.

Lorsque le volant du véhicule automobile est entraîné à rotation autour de son axe, le couvercle 200 est entraîné à rotation par rapport au boîtier 100.

Au cours de ce pivotement, les spires du conducteur souple 300 se déserrent ou se resserrent en fonction du sens de rotation du volant, mais le conducteur 300 assure en permanence une liaison électrique entre les contacts intégrés aux connecteurs 130 et 230. Ainsi, le conducteur 300 assure une liaison électrique permanente entre des modules liés au volant et des modules liés au support de la colonne de direction ou d'une façon plus générale au véhicule.

Cependant, au cours de cette rotation relative entre le couvercle 200 et le boîtier 100, l'index 400 étant lié à rotation avec le boîtier 100 grâce à la coopération définie entre le corps de guidage 420 et la rainure 150, est entraîné à coulissement radial par la coopération définie entre le corps indicateur 410 et la rainure spiralée 250.

En position médiane du contacteur, c'est-à-dire en position médiane de la rotation relative entre le couvercle 200 et le boîtier 100, le corps indicateur 410 est placé en regard de la lumière 260.

Selon que le volant est entraîné à rotation dans un sens ou dans l'autre, à partir de ce point milieu, l'index 400 est déplacé radialement vers l'intérieur ou vers l'extérieur, jusqu'à venir en butée contre l'une respective des extrémités de la rainure spiraleée 250.

Il faut noter que de préférence, les rainures 150, 250 et les formes 410, 420 de l'index 400 sont adaptées de sorte qu'en position extrême de la rotation relative, le corps indicateur 412 vienne en butée contre une extrémité de la rainure spiralée 250 et non point que le guide indicateur 420 vienne en butée contre une extrémité de la rainure radiale 150.

L'intérêt fondamental de la structure proposée dans le cadre de la présente invention est de permettre une détection précise du point milieu du contacteur.

En particulier, la détection de coïncidence exacte entre le corps indicateur 410 et la lumière 260 permet une détection de point milieu plus précise que celle autorisée grâce à la recherche de simple coïncidence d'index comme enseigné dans le document 2667457.

On rappelle que la détection du point milieu du contacteur est indispensable lors de l'assemblage du contacteur sur la colonne de direction.

On retrouve sur la figure 5, une variante de réalisation de contacteur électrique tournant conforme à la présente invention, comprenant un boîtier 100, une entretoise 140, un couvercle 200, un conducteur souple 300 et un index 400, généralement conforme aux dispositions décrites précédemment.

Cependant, la variante de réalisation représentée sur la figure 5 se distingue du mode de réalisation représenté sur les figures 1 à 4 précédemment décrites par le fait que selon la figure 5, la rainure spiralée est réalisée sur l'entretoise 140 et porte la référence 170, tandis que la rainure radiale servant de glissière à l'index 400 est formée sur la face interne du couvercle 200.

La lumière 260 reste quant à elle solidaire du couvercle 200.

Le fonctionnement du contacteur représenté sur la figure 5 reste identique à celui décrit précédemment. Là encore, le point milieu du contacteur est détecté par la coïncidence exacte entre le corps indicateur 410 de l'index 400 et la lumière 260.

Bien entendu la présente invention n'est pas limitée aux modes de réalisation particuliers qui viennent d'être décrits mais s'étend à toute variante conforme à son esprit.

Ainsi par exemple, on peut prévoir des variantes de réalisation selon lesquelles la lumière de détection 260 est formée sur la partie fixe, c'est-à-dire sur le corps de boîtier 100 ou encore sur l'entretoise 140, sous réserve que cette lumière soit observable par l'utilisateur, et non point sur la partie mobile au couvercle 200.

En outre, la rainure spiralée 250 où 170 ou le guide radial 150 peut être formée sur une pièce intermédiaire libre de rotation par rapport au boîtier 100 et au couvercle 200 mais reliée à ceux-ci par l'intermédiaire de pignons satellites comme décrit par exemple dans les documents FR-A-2667456, FR-A-2667457 et FR-A-2667458.

Selon une autre caractéristique avantageuse de la présente invention, la longueur radiale L (c'est-à-dire considérée dans une direction radiale par rapport à l'axe de rotation des deux éléments 100, 200) du corps de guidage 420, ou talon, de l'index 400, est au moins égale à l'amplitude de déplacement radial de l'index 400, dans la rainure spiralée 250 ou 170, lorsque les deux éléments 100 et 200 sont déplacés à rotation relative sur la moitié de leur déplacement maximal, i.e. lorsque les deux éléments 100 et 200 sont déplacés à rotation relative entre le point milieu et l'une ou l'autre des deux extrémités possibles du déplacement.

En outre ce corps de guidage ou talon 420 présente un aspect visuel, en regard de la lumière 260, différent de l'aspect visuel du corps indicateur 410.

Ainsi la présence du talon 420 en regard de la lumière 260 permet immédiatement à l'opérateur de connaître la position relative des deux éléments 100 et 200 par rapport au point milieu, c'est-à-dire de connaître immédiatement dans quel sens les éléments 100 et 200 ont déjà été déplacés à partir de ce point milieu, et par conséquent dans quel sens (inverse) ces éléments 100 et 200 doivent être déplacés pour retrouver ce point milieu.

En effet l'absence de ce talon 420 et du corps indicateur 410 en regard de la lumière 260 signale immédiatement à l'opérateur que les deux éléments 100 et 200 ont été déplacés dans le sens opposé à partir du point milieu.

Cette différence d'aspect visuel entre le corps indicateur 410 et le talon 420, peut être due à différents moyens.

Il peut s'agir par exemple d'une différence de largeur, dans la direction périphérique, entre le corps indicateur 410 et la talon 420.

Il peut s'agir également d'une différence de couleur, due à des revêtements de couleurs différentes déposés respectivement sur le corps indicateur 410 et le talon 420, à un revêtement déposé sur l'un du corps indicateur 410 ou du talon 420, présentant une couleur différente du matériau formant l'autre du talon 420 et du corps indicateur 410 ou encore à des matériaux de couleurs intrinsèques différentes composant respectivement le corps indicateur 410 et le talon 420.

Selon encore une autre variante, l'index 400 peut être pourvu de deux corps de guidage ou talons 420a, 420b, respectivement de part et d'autre radialement du corps indicateur 410, et présentant des aspects visuels, de préférence des couleurs - différents(es), en regard de la fenêtre 260 et chacun au moins une longueur radiale L.

Un tel index 400 à deux talons 420a, 420b est illustré à titre d'exemple non limitatif sur les figures 6 et 7.

Ces deux talons 420a et 420b peuvent ainsi présenter sur leur surface dirigée vers la fenêtre 260, des couleurs différentes entre elles et différente du corps indicateur 410.

Les deux talons 420a et 420b peuvent également être munis sur leur surface dirigée vers la fenêtre 260, d'autres marquages, tels que par exemple des échelles ou chiffrages, visualisant le nombre de tours à opérer pour atteindre le point milieu du contacteur, voire des flêches indiquant le sens de rotation pour atteindre ce point milieu.

On a ainsi représenté sur la figure 6 un index 400 destiné au premier mode de réalisation de contacteur conforme aux figures 1 à 3, comportant des marquages "1" et "2" sur chacun des talons 420a et 420b pour indiquer le nombre de tours à opérer. On a représenté sur la figure 7 un index 400 similaire destiné au second mode de réalisation de contacteur conforme à la figure 5.

Lorsque la face des talons 420a et 420b dirigée vers la fenêtre 260, correspond au corps indicateur 410 (cas des figures 1 à 3), cette face peut être munie de marquages en relief sous réserve que ceux-ci respectent le pas du guide spiral 250 pour ne pas perturber le fonctionnement du contacteur.

Le fonctionnement de cette variante à deux talons 420a et 420b reste identique à celle décrite précédemment : lorsque les deux éléments 100, 200, sont déplacés à partir du point milieu, l'un ou l'autre des deux talons 420a, 420b, apparaît en regard de la lumière 260. Et par conséquent, l'opérateur connaît directement la position relative des deux éléments 100, 200, en fonction de l'aspect observé de la lumière 260, et donc le sens de rotation requis pour retrouver le point milieu.

## Revendications

1. Contacteur électrique tournant comprenant deux éléments (100, 200) susceptibles de rotation relative, un conducteur souple (300) placé entre ces deux éléments (100, 200), un guide spiral (250, 170) lié à l'un de ces deux éléments (100, 200) et concentrique à l'axe de rotation relative de ces deux éléments, une glissière radiale (150) liée à l'autre de ces deux éléments (100, 200) et un index (400) en prise à la fois avec le guide spiral (250, 170) et ladite glissière (150), de sorte que l'index (400) soit déplacé radialement par rapport aux deux éléments lorsque ceux-ci sont entraînés en rotation relative,
caractérisé par le fait que le contacteur électrique comprend une lumière (260) optiquement transparente limitée radialement à la position occupée par un corps indicateur (410) de l'index (400) en point milieu du contacteur.

2. Contacteur selon la revendication 1, caractérisé par le fait qu'il comprend des butées limitant le déplacement à rotation relative entre les deux éléments (100, 200) du contacteur.

3. Contacteur selon la revendication 2, caractérisé par le fait que les butées sont formées par les extrémités du guide spiral (250, 170), qui servent d'appui à l'index (400).

4. Contacteur selon l'une des revendications 1 à 3, caractérisé par le fait que l'index (400) a la forme générale d'un T.

5. Contacteur selon l'une des revendications 1 à 4, caractérisé par le fait que l'index (400) comprend un premier élément (410), servant de corps indicateur, conçu pour glisser dans le guide spiral (250, 170), et un second élément (420) conçu pour coulisser dans la glissière radiale (150).

6. Contacteur selon l'une des revendications 1 à 5, caractérisé par le fait que le corps indicateur (410) de l'index (400) et la lumière (260) présentent une section en secteur de couronne.

7. Contacteur selon l'une des revendications 1 à 6, caractérisé par le fait que le guide spiral (250, 170) est lié au boîtier fixe, tandis que le guide radial (150) est formé dans l'élément mobile (200) du contacteur.

8. Contacteur selon l'une des revendications 1 à 6, caractérisé par le fait que le guide spiral (250, 170) est formé dans le boîtier fixe (200) tandis que le guide radial est formé sur l'élément mobile (200) du contacteur.

9. Contacteur selon l'une des revendications 1 à 8, caractérisé par le fait que l'élément fixe (100) du contacteur définit une chambre annulaire (116) pourvue de points de fixation (120) et équipé d'un corps de connecteur (130).

10. Contacteur selon la revendication 9, caractérisé par le fait que le boîtier fixe (100) comprend en outre une entretoise en forme de couronne (140).

11. Contacteur selon la revendication 10, caractérisé par le fait que le guide spiral (170) est formé par l'entretoise (140).

12. Contacteur selon la revendication 10, caractérisé par le fait que la glissière radiale (150) est formée sur l'entretoise (140).

13. Contacteur selon l'une des revendications 1 à 12, caractérisé par le fait que le nombre de tours du guide spiral (250, 170) est au moins égal au nombre de tours du volant.

14. Contacteur selon l'une des revendications 1 à 13, caractérisé par le fait que l'élément mobile (200) du contacteur comprend une paroi plane en forme de couronne (210) équipée de moyens cylindriques (220) aptes à assurer le guidage à rotation sur le boîtier fixe (200) tout en assurant l'immobilisation à translation.

15. Contacteur selon l'une des revendications 1 à 14, caractérisé par le fait que la lumière (260) est formée sur l'élément mobile (200) du contacteur.

16. Contacteur selon l'une des revendications 1 à 14, caractérisé par le fait que la lumière (260) est formée sur l'élément fixe (100) du contacteur.

17. Contacteur selon l'une des revendications 1 à 16, caractérisé par le fait que l'un du guide spiral (250, 170) ou de la glissière radiale (150) est formé sur une pièce intermédiaire susceptible de rotation par rapport à l'élément fixe (100) et à l'élément mobile (200) du contacteur, laquelle pièce intermédiaire est liée à ces éléments par l'intermédiaire de pignons satellites.

18. Contacteur selon l'une des revendications 1 à 17, caractérisé par le fait que l'index (400) est muni d'un marquage de couleur sur sa face (414) observable à travers la lumière (260).

19. Contacteur selon l'une des revendications 1 à 18, caractérisé par le fait que l'index (400) possède un talon (420) situé dans la glissière radiale (150) dont la longueur radiale (L) est au moins égale à la moitié du déplacement radial de l'index (400) lorsque les deux éléments (100, 200) sont déplacés sur leur amplitude maximale de rotation relative.

20. Contacteur selon la revendication 19, caractérisé par le fait que le talon (420) présente un aspect visuel, en regard de la lumière (360), différent de l'aspect visuel du corps indicateur (410) solidaire de l'index (400) placé en regard de la lumière (260) en position médiane du contacteur.

21. Contacteur selon la revendication 20, caractérisé par le fait que la différence d'aspect visuel entre le talon (420) et le corps indicateur (410) est due à une différence de largeur et/ou de couleur.

22. Contacteur selon l'une des revendications 19 à 21, caractérisé par le fait que l'index (400) possède deux talons (420a, 420b) situés respectivement de part et d'autre radialement du corps indicateur (410) de l'index et possédant chacun une longueur radiale (L) au moins égale à la moitié du déplacement radial de l'index (400) pour la course maximale du contacteur, et présentant des aspects visuels respectifs différents en regard de la lumière (260).

23. Contacteur selon la revendication 22, caractérisé par le fait que les deux talons (420a et 420b) présentent sur leur surface dirigée vers la fenêtre (260), des couleurs différentes entre elles et différente du corps indicateur (410).

24. Contacteur selon l'une des revendications 22 ou 23, caractérisé par le fait que les deux talons (420a et 420) sont munis sur leur surface dirigée vers la fenêtre (260), de marquages, tels que des échelles ou chiffrages, visualisant le nombre de tours à opérer pour atteindre le point milieu du contacteur, ou des flêches indiquant le sens de rotation pour atteindre ce point milieu.

25. Contacteur selon l'une des revendications 1 à 24, caractérisé par le fait que l'index (400) est muni sur sa partie (420) engagée dans la glissière radiale (150) et sur sa face dirigée vers le guide spiral (250), de marquages en relief respectant le pas du guide spiral (250) pour ne pas perturber le fonctionnement du contacteur.

## Claims

1. A rotary electrical contactor comprising two elements (100, 200) capable of relative rotation, a flexible conductor (300) placed between these two elements (100, 200), a spiral guide (250, 170) associated with one of the two elements (100, 200) and concentric about the axis of relative rotation between said two elements, a radial slideway (150) associated with the other one of said two elements (100, 200), and an index (400) engaged both in the spiral guide (250, 170) and in said slideway (150) so that the index (400) is moved radially relative to the two elements when they are driven in relative rotation, the contactor being characterized by the fact that it includes an optically transparent window (260) radially restricted to the position occupied by an indicator body (410) of the index (400) when the contactor is in its center position.

2. A contactor according to claim 1, characterized by the fact that it includes abutments limiting relative rotary displacement between the two elements (100, 200) of the contactor.

3. A contactor according to claim 2, characterized by the fact that the abutments are formed by the ends of the spiral guide (250, 170) serving as abutments for the index (400).

4. A contactor according to any one of claims 1 to 3, characterized by the fact that the index (400) is generally T-shaped.

5. A contactor according to any one of claims 1 to 4, characterized by the fact that the index (400) comprises a first element (410) serving as an indicator body and designed to slide in the spiral guide (250, 170), and a second element (420) designed to slide in the radial slideway (150).

6. A contactor according to any one of claims 1 to 5, characterized by the fact that the indicator body (410) of the index (400) and the window (260) have a section in the form of an annular sector.

7. A contactor according to any one of claims 1 to 6, characterized by the fact that the spiral guide (250, 170) is associated with the stationary box while the radial slideway (150) is formed in the moving element (200) of the contactor.

8. A contactor according to any one of claims 1 to 6, characterized by the fact that the spiral guide (250, 170) is formed in the stationary box (200) while the radial slideway is formed in the moving element (200) of the contactor.

9. A contactor according to any one of claims 1 to 8, characterized by the fact that the stationary element (100) of the contactor defines an annular chamber (116) provided with fixing points (120) and fitted with a connector body (130).

10. A contactor according to claim 9, characterized by the fact that the stationary box (100) further includes a spacer in the form of an annulus (140).

11. A contactor according to claim 10, characterized by the fact that the spiral guide (170) is formed by the spacer (140).

12. A contactor according to claim 10, characterized by the fact that the radial slideway (150) is formed in the spacer (140).

13. A contactor according to any one of claims 1 to 12, characterized by the fact that the number of turns of the spiral guide (250, 170) is not less than the number of turns of the steering wheel.

14. A contactor according to any one of claims 1 to 13, characterized by the fact that the moving element (200) of the contactor comprises a ring-shaped plane wall (210) fitted with cylindrical means (220) suitable for providing rotary guidance relative to the stationary box (200) while preventing movement in translation.

15. A contactor according to any one of claims 1 to 14, characterized by the fact that the window (260) is formed in the moving element (200) of the contactor.

16. A contactor according to any one of claims 1 to 14, characterized by the fact that the window (260) is formed in the stationary element (100) of the contactor.

17. A contactor according to any one of claims 1 to 16, characterized by the fact that one of the spiral guides (250, 170) and the radial slideway (150) is formed on an intermediate part capable of rotating relative to the stationary element (100) and to the moving element (200) of the contactor, which intermediate part is linked to said elements by means of planetary gears.

18. A contactor according to any one of claims 1 to 17, characterized by the fact that the index (400) is provided with color marking on its face (414) that is observable through the window (260).

19. A contactor according to any one of claims 1 to 18, characterized by the fact that the index (400) has a heel (420) situated in the radial slideway (150) of radial length (L) not less than half the radial displacement of the index (400) when the two elements (100, 200) are moved through their maximum amplitude of relative rotation.

20. A contactor according to claim 19, characterized by the fact that the visual appearance of the heel (420) as seen through the window (260) differs from the visual appearance of the indicator body (410) secured to the index (400) placed facing the window (260) when the contactor is in its center position.

21. A contactor according to claim 20, characterized by the fact that the difference in visual appearance between the heel (420) and the indicator body (410) is due to a difference in width and/or in color.

22. A contactor according to any one of claims 19 to 21, characterized by the fact that the index (400) has two heels (420a, 420b) situated on respective radial sides of the indicator body (410) of the index and each possessing a radial length (L) not less than half the radial displacement of the index (400) for the maximum stroke of the contactor, and presenting respective different appearances in the window (260).

23. A contactor according to claim 22, characterized by the fact that the two heels (420a and 420b) are of colors that are different from each other and from the indicator body (410) on their surfaces directed towards the window (260).

24. A contactor according to claim 22 or 23, characterized by the fact that the two heels (420a and 420b) are provided on their surfaces directed towards the window (260) with markings such as scales or digits indicating the number of turns that need to be made to reach the center point of the contactor, or such as arrows indicating the direction of rotation for reaching the center point.

25. A contactor according to any one of claims 1 to 24, characterized by the fact that the index (400) is provided on its portion (420) engaged in the radial slideway (150) and on its face directed towards the spiral guide (250) with markings in relief that comply with the pitch of the spiral guide (250) to avoid disturbing operation of the contactor.

## Patentansprüche

1. Drehbare elektrische Verbindungsvorrichtung, umfassend zwei Relativdrehbewegungs-Elemente (100, 200), einen zwischen den beiden Elementen (100, 200) angebrachten biegsamen Leiter (300), eine Spiralführung (250, 170), verbunden mit einem der beiden Elemente (100, 200) und konzentrisch zur Relativdrehbewegungsachse dieser beiden Elemente , eine Gleitführung (150), verbunden mit dem anderen dieser beiden Elemente (100, 200), und einen Index bzw. Zeiger (400), im Eingriff zugleich mit der Spiralführung (250, 170) und der genannten Gleitführung (150), so daß der Zeiger (400) sich radial verschiebt in bezug auf die beiden Elemente, wenn diese eine Relativdrehbewegung ausführen,
**dadurch gekennzeichnet**
daß die elektrische Verbindungsvorrichtung einen optisch transparenten Schlitz bzw. ein Sehloch (260) aufweist, radial begrenzt auf die Position, die durch einen Anzeigekörper (410) des Zeigers (400) in der Mittelstellung der Verbindungsvorrichtung eingenommen wird.

2. Verbindungsvorrichtung nach Anspruch 1, dadurch gekennzeichnet, daß sie Anschläge umfaßt, die die Relativdrehbewegungen zwischen den beiden Elementen (100, 200) der Verbindungsvorrichtung begrenzen.

3. Verbindungsvorrichtung nach Anspruch 2, dadurch gekennzeichnet, daß die Anschläge gebildet werden durch die Enden der Spiralführung (250, 170), die dem Zeiger (400) als Auflage bzw. Stütze dienen.

4. Verbindungsvorrichtung nach einem der Ansprüche 1 bis 3, dadurch gekennzeichnet, daß der Zeiger (400) die allgemeine Form eines T aufweist.

5. Verbindungsvorrichtung nach einem der Ansprüche 1 bis 4, dadurch gekennzeichnet, daß der Zeiger (400) eine erstes Element (410) umfaßt, das als Anzeigekörper dient, so ausgebildet, daß es in der Spiralführung (250, 170) gleiten kann, und ein zweites Element (420), so ausgebildet, daß es in der Radialfuhrung (150) gleiten kann.

6. Verbindungsvorrichtung nach einem der Ansprüche 1 bis 5, dadurch gekennzeichnet, daß der Anzeigekörper (410) des Zeigers (400) und das Sehloch (260) einen ringsektorförmigen Querschnitt bzw. Schnitt aufweisen.

7. Verbindungsvorrichtung nach einem der Ansprüche 1 bis 6, dadurch gekennzeichnet, daß die Spiralführung (250, 170) mit dem feststehenden Gehäuse der Verbindungsvorrichtung verbunden ist, während die Radialführung (150) in dem beweglichen Element (200) ausgebildet ist.

8. Verbindungsvorrichtung nach einem der Ansprüche 1 bis 6, dadurch gekennzeichnet, daß die Spiralführung (250, 170) in dem feststehenden Gehäuse (200) der Verbindungsvorrichtung ausgebildet ist, während die Radialführung in dem beweglichen Element (200) ausgebildet ist.

9. Verbindungsvorrichtung nach einem der Ansprüche 1 bis 8, dadurch gekennzeichnet, daß das feststehende Element (100) der Verbindungsvorrichtung eine ringförmige Kammer (116) definiert, versehen mit Befestigungspunkten (120) und ausgestattet mit einem Verbindungsköper (130),

10. Verbindungsvorrichtung nach Anspruch 9, dadurch gekennzeichnet, daß das feststehende Gehäuse (100) außerdem eine kranzförmige Zwischenscheibe (140) umfaßt.

11. Verbindungsvorrichtung nach Anspruch 10, dadurch gekennzeichnet, daß die Spiralführung (170) in der Zwischenscheibe (140) ausgebildet ist.

12. Verbindungsvorrichtung nach Anspruch 10, dadurch gekennzeichnet, daß die Radialführung (150) in der Zwischenscheibe (140) ausgebildet ist.

13. Verbindungsvorrichtung nach einem der Ansprüche 1 bis 12, dadurch gekennzeichnet, daß die Anzahl der Windungen der Spiralführung (250, 170) wenigstens gleich der Anzahl der Lenkradumdrehungen ist.

14. Verbindungsvorrichtung nach einem der Ansprüche 1 bis 13, dadurch gekennzeichnet, daß das bewegliche Element (200) der Verbindungsvorriohtung eine ebene kranzförmige Wand (210) umfaßt, ausgestattet mit zylindrischen Einrichtungen (220), welche die Führung der Rotationsbewegung in dem feststehenden Gehäuse (200) gewährleisten und dabei keine Translationsbewegung zulassen.

15. Verbindungsvorrichtung nach einem der Ansprüche 1 bis 14, dadurch gekennzeichnet, daß das Sehloch (260) auf dem beweglichen Element (200) der Verbindungsvorrichtung ausgebildet ist.

16. Verbindungsvorrichtung nach einem der Ansprüche 1 bis 14, dadurch gekennzeichnet, daß das Sehloch (260) in dem feststehenden Element (100) der Verbindungsvorrichtung ausgebildet ist.

17. Verbindungsvorrichtung nach einem der Ansprüche 1 bis 16, dadurch gekennzeichnet, daß entweder die Spiralführung (250, 170) oder die Radialführung (150) in einer bezüglich des feststehenden Elements (100) und des beweglichen Elements (200) drehbaren Zwischenscheibe ausgebildet ist, wobei diese Zwischenscheibe mit diesen Elementen über Planetenräder verbunden ist.

18. Verbindungsvorrichtung nach einem der Ansprüche 1 bis 17, dadurch gekennzeichnet, daß der Zeiger (400) auf der durch das Sehloch (260) sichtbaren Seite (414) mit einer Farbmarkierung versehen ist.

19. Verbindungsvorrichtung nach einem der Ansprüche 1 bis 18, dadurch gekennzeichnet, daß der Zeiger (400) einen Absatz (420) umfaßt, der in der Radialführung (150) sitzt, dessen radiale Länge (L) wenigstens gleich der Hälfte der Radialverschiebung des Zeigers (400) beträgt, wenn die beiden Elemente (100, 200) über ihren maximalen Relativdrehbewegungs-Ausschlag bewegt werden.

20. Verbindungsvorrichtung nach Anspruch 19, dadurch gekennzeichnet, daß der Absatz (420), dem Sehloch (260) gegenüberstehend, ein Aussehen hat, das sich unterscheidet vom Aussehen des mit dem Zeiger (400) fest verbundenen Anzeigekörpers (410), der in der Mittelstellung der Anzeigevorrichtung dem Sehloch (260) gegenübersteht.

21. Verbindungsvorrichtung nach Anspruch 20, dadurch gekennzeichnet, daß die Aussehensunterschiede zwischen dem Absatz (420) und dem Anzeigekörper (410) durch einen Unterschied der Breite und/oder der Farbe hervorgerufen wird.

22. Verbindungsvorrichtung nach einem der Ansprüche 19 bis 21, dadurch gekennzeichnet, daß der Zeiger (400) zwei Absätze (420a, 420b) besitzt, die sich jeweils beiderseits radial des Anzeigekörpers (410) des Zeigers befinden und von denen jeder eine radiale Länge L aufweist, die wenigstens gleich der Hälfte der Radialverschiebung des Zeigers (400) bei maximalem Ausschlag der Verbindungsvorrichtung ist, und die, dem Sehloch (260) gegenüberstehend, jeweils verschieden aussehen.

23. Verbindungsvorrichtung nach Anspruch 22, dadurch gekennzeichnet, daß die beiden Absätze (420a, 420b) auf ihrer dem Fenster (260) zugewandten Fläche untereinander verschiedene, sich vom Anzeigekörper (410) unterscheidende Farben aufweisen.

24. Verbindungsvorrichtung nach einem der Ansprüche 22 oder 23, dadurch gekennzeichnet, daß die beiden Absätze (420a, 420b) auf ihren dem Fenster (260) zugewandten Flächen Markierungen aufweisen, z.B. Skalen oder Ziffern, die die Anzahl der Umdrehungen sichtbar machen, die nötig sind um den Mittenpunkt bzw. die Mittelstellung der Verbindungsvorrichtung zu erreichen, oder Pfeile, die die Drehrichtung anzeigen, um diesen Mittenpunkt bzw. diese Mittelstellung zu erreichen.

25. Verbindungsvorrichtung nach einem der Ansprüche 1 bis 24, dadurch gekennzeichnet, daß der Zeiger (400) auf seinem in der Radialführung (150) sitzenden Teil (420) und auf seiner der Spiralführung (250) zugewandten Fläche bzw. Seite mit Reliefmarkierungen versehen ist, die der Steigung bzw. Ganghöhe der Spiralführung (250) entsprechen, um die Wirkungsweise der Verbindungsvorrichtung nicht zu stören.
